# EUROPÄISCHE PATENTANMELDUNG

(11) **EP 0 879 798 A1**
(43) Veröffentlichungstag der Anmeldung: **25.11.1998**
(21) Anmeldenummer: 98107536.9
(22) Anmeldetag: 24.04.1998
(51) Int. Cl.: C03B 25/06

(54) **Kühlbahn, insbesondere zum Kühlen von Glasgegenständen**

(30) Priorität: 22.05.1997 DE 19721334
(71) Anmelder: Horn Glasanlagenbau GmbH & Co. KG, 95703 Plössberg (DE)
(72) Erfinder: Horn, Helmut, Dipl.-Ing. (FH), 95703 Plössberg (DE)
(74) Vertreter: Matschkur, Lindner Blaumeier Patent- und Rechtsanwälte

(57) **Zusammenfassung**

Kühlbahn (8) zum Kühlen von in heißem Zustand bearbeiteten oder sich befindenden Gegenständen, insbesondere von Glasgegenständen, mit einem im Inneren der isolierten Kühlbahn vorgesehenen Ofenraum (11), dem mindestens ein Ventilator (14) zum Umwälzen der Raumluft über einen außerhalb des Ofenraums verlaufenden Luftkanal (10) zugeordnet ist, und mit wenigstens einer im Ofenraum (11) umlaufenden, die Gegenstände tragenden Fördereinrichtung (17), wobei zumindest die benachbart zum Ventilator (14) verlaufende, den Luftkanal (10) vom Ofenraum (11) trennende Wand (15) zumindest im Bereich des Ventilators (14) mehrere einen Luftdurchtritt vom Ofenraum (11) zum Luftkanal (10) ermöglichende Öffnungen (16) aufweist.

## Beschreibung

Die Erfindung betrifft eine Kühlbahn zum Kühlen von in heißem Zustand bearbeiteten oder sich befindenden Gegenständen, insbesondere von Glasgegenständen, mit einem im Inneren der isolierten Kühlbahn vorgesehenen Ofenraum, dem ein Ventilator zum Umwälzen der Raumluft über einen außerhalb des Ofenraums verlaufenden Luftkanal zugeordnet ist, und mit wenigstens einer im Ofenraum umlaufenden, die Gegenstände tragenden Fördereinrichtung.

Solche Kühlbahnen kommen beispielsweise in Verbindung mit einer vorgeschalteten Glasbearbeitungsmaschine, wie beispielsweise einer Glaspresse zum Herstellen von Hohl- oder Containerglas zum Einsatz. Sie dienen zum definierten und kontrollierten Abkühlen der heißen, auf der integrierten Fördereinrichtung transportierten Gegenstände. Zu diesem Zweck weisen die zum Kühlen von Form- oder Containerglas zwischen 15 - 25 m, zum Kühlen von Flachglas zwischen 55 - 60 m langen tunnelförmigen Kühlbahnen mehrere hintereinander geschaltete Kühlzonen auf, innerhalb welcher weitgehend definierte Temperaturen herrschen, die ein kontrolliertes Abkühlen und Tempern der Gegenstände ermöglichen. Um die Temperatur innerhalb einer Zone, die jeweils von einer Kühlbahn oder einem Kühlbahnelement gebildet wird, möglichst konstant und gleichmäßig halten zu können, ist zumeist deckenseitig ein Ventilator vorgesehen, der Luft aus dem Ofenraum ansaugt und in einen den Ofenraum umgebenden, zwischen diesem und der Isolierung verlaufenden Luftkanal einbläst, wobei der Luftkanal so angeordnet ist, daß die eingeblasene Luft von unten in den Ofenraum wiederum zugeführt wird. Nachteilig hierbei aber ist, daß bedingt durch die eine zentrale Ansaugstelle des Ventilators sich innerhalb des Ofenraums ein Temperaturgradient einstellt, der ausgehend von der Ofenraummitte, in der die Luftumwälzung maximal ist, zu den Rändern des Ofenraums und damit der Kühlbahn abnimmt. Die Temperaturdifferenz kann dabei zwischen 20 bis 50° betragen, was sich sehr nachteilig auf den Abkühl- und Temperprozeß auswirkt. Dieser Temperaturgradient wird durch ein innerhalb des Ofenraums gegebenes ungleichmäßiges Strömungsverhalten hervorgerufen, bedingt durch die einzige zentrale Luftansaugstelle des Ventilators.

Der Erfindung liegt damit das Problem zugrunde, eine Kühlbahn anzugeben, die innerhalb des Ofenraumes ein möglichst gleichmäßiges Strömungsverhalten zeigt, welches einen möglichst gleichmäßigen Temperaturverlauf über die gesamte Kühlbahnbreite ermöglicht.

Zur Lösung dieses Problems ist bei einer Kühlbahn der eingangs genannten Art erfindungsgemäß vorgesehen, daß zumindest die benachbart zum Ventilator verlaufende, den Luftkanal vom Ofenraum trennende Wand zumindest im Bereich des Ventilators mehrere einen Luftdurchtritt vom Ofenraum zum Luftkanal ermöglichende Öffnungen aufweist.

Die erfindungsgemäß vorgesehenen Öffnungen ermöglichen einen Luftdurchtritt vom Ofenraum in den Luftkanal auch außerhalb der eigentlichen Ansaugstelle des Ventilators, wobei der Durchtrittseffekt dadurch verstärkt wird, daß der Ventilator die Luft innerhalb des Luftkanals einbläst und so bedingt durch die gegebenen Druckverhältnisse Luft aus dem Ofenraum durch die erfindungsgemäßen Öffnungen abgesaugt wird. Je nachdem, wie die Öffnungen angeordnet sind, kann so mit besonderem Vorteil auf das Strömungsverhalten zur Vergleichmäßigung desselben eingewirkt werden, wobei erfindungsgemäß die Öffnungen im wesentlichen über die gesamte Breite der Wand angeordnet sind, bei welcher es sich in der Regel um die Ofenraumdecke handelt, da der Ventilator erfindungsgemäß im Bereich der Decke der Kühlbahn angeordnet sein kann. Vor allem diese Ausführung mit über die gesamte Wandbreite und selbstverständlich auch Kühlbahntiefe vorgesehenen Öffnungen führt zu einem weitestgehend gleichmäßigen Strömungsverhalten, welches zu einem über die gesamte Kühlbahnbreite weitestgehend gleichmäßigen Temperaturverlauf führt.

Besonders zweckmäßig hat es sich erwiesen, wenn zumindest einem Teil der Öffnungen jeweils eine Luftleiteinrichtung zugeordnet ist, wobei selbstverständlich auch alle Öffnungen mit solchen Luftleiteinrichtungen, die erfindungsgemäß als von der Wand in den Luftkanal vorspringende Leitbleche ausgebildet sein können, versehen sein können. Mit diesen Luftleitblechen, die selbstverständlich so gerichtet sind, daß der durch die Öffnung tretenden Ofenraumluft eine Bewegungskomponente in Strömungsrichtung des Luftkanals gegeben wird, läßt sich die Luftumwälzung noch weiter verbessern und vorteilhaft auf das Strömungsprofil und damit den Temperaturverlauf einwirken.

Wie bereits beschrieben, tritt die Luft bei oberseitiger Ventilatoranordnung von unten in den Ofenraum ein, wobei die Fördereinrichtung ofenraumunterseitig vorgesehen ist. Um zu vermeiden, daß die eintretende Luft nur punktuell einströmt, das heißt, nicht über den gesamten Ofenraumboden, was sich wiederum nachteilig auf die Strömungsverhältnisse auswirken kann, ist in weiterer Erfindungsausgestaltung vorgesehen, daß im Ofenraum im Bereich unterhalb der Fördereinrichtung Strömungsführungseinrichtungen, insbesondere in Form von Leitblechen vorgesehen sind, die eine auch dort definierte Luftführung ermöglichen.

Aufgrund von sehr unterschiedlichen Leistungsanforderungen der Kühlbahnen ist es teilweise notwendig, mehrere Gebläse senkrecht zur Förderrichtung in einer Kühlbahnzone anzuordnen, da durch die geforderten größeren Leistungen weitere Fördereinrichtungen notwendig sind. Die Erfindung kann mit dem mehrfachen Gebläse in Kombination gebracht werden. Durch die mehrfachen Gebläse wird das Strömungsprofil ebenfalls homogenisiert. Daneben kann erfindungsgemäß wenigstens ein dem Ofenraum zugeordneter Brenner vorgesehen sein, wobei über die gesamte Kühlbahnlänge selbstverständlich auch mehrere solcher Brenner, die zum Einstellen der erforderlichen Zonentemperatur dienen, vorgesehen sein können.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Schnittansicht durch eine erfindungsgemäße Kühlbahn, und
- Fig. 2: eine Schnittansicht durch eine Kühlbahn gemäß dem Stand der Technik.

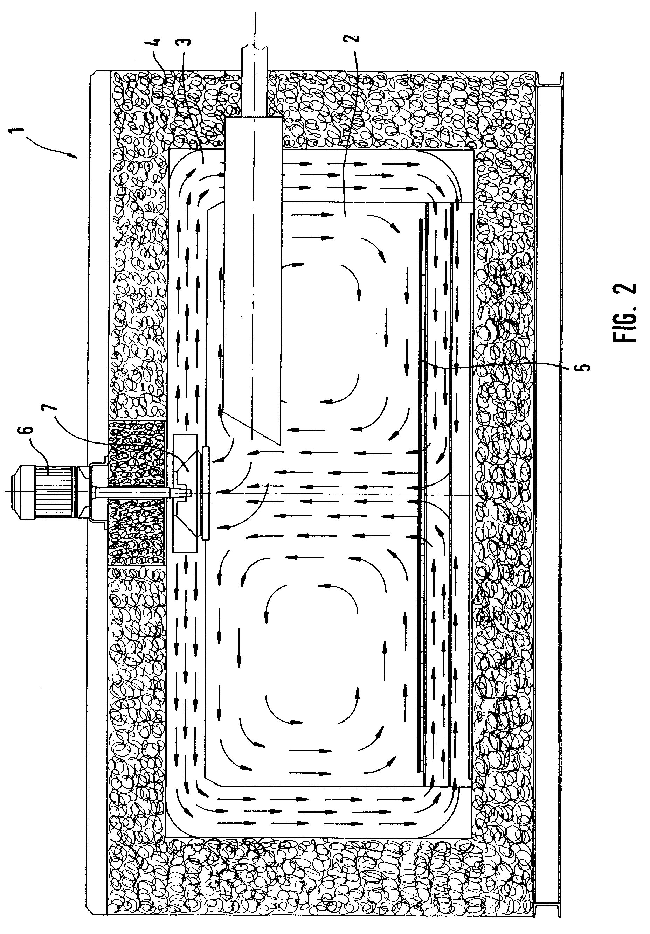

Zum besseren Verständnis der Ausgangsproblematik sei zunächst auf Fig. 2, die den nachteiligen Stand der Technik zeigt, eingegangen. Fig. 2 zeigt eine Kühlbahn 1, bestehend aus einem Ofenraum 2 mit einem diesen oberhalb und seitlich umgebenden Luftkanal 3, und einer sich daran anschließenden allseitig umlaufenden Isolierung 4. Im Ofenraum ist bodenseitig ein umlaufendes Förderband 5 vorgesehen, wobei der Übersichtlichkeit halber nur der obere Teil des Bandes gezeichnet ist. Im Luftkanal ist ein mittels eines Motors 6 angetriebener Ventilator 7 angeordnet, welcher, wie durch die Pfeile angedeutet, Luft aus dem Ofenraum 2 ansaugt und nach beiden Seiten in den Luftkanal 3 einbläst. Die eingeblasene Luft tritt, wie durch die Pfeile dargestellt, ofenraumunterseitig wieder ein. Bedingt durch die zentrale, mittige Ansaugung der Luft über den Ventilator 7 stellt sich innerhalb des Ofenraumes ein turbulentes, ungleichmäßiges Strömungsprofil dar, wie durch die kreisenden Pfeile innerhalb der rechten und linken Ofenraumbereiche dargestellt ist. Das heißt, innerhalb dieser Bereiche findet ein nur unvollständiger Luftumwälzprozeß statt, was zu einem beachtlichen Temperaturgradienten über die gesamte Ofenraumbreite führt. Diese störende Zirkulationsströmung wird auch nicht dadurch vermieden, daß ein gewisser Luftanteil auch durch das Förderband 5 in den Seitenbereichen durchtritt, da eben nur mittig angesaugt wird und sich hierdurch ein entsprechendes Strömungsprofil innerhalb des Ofenraums ausbildet.

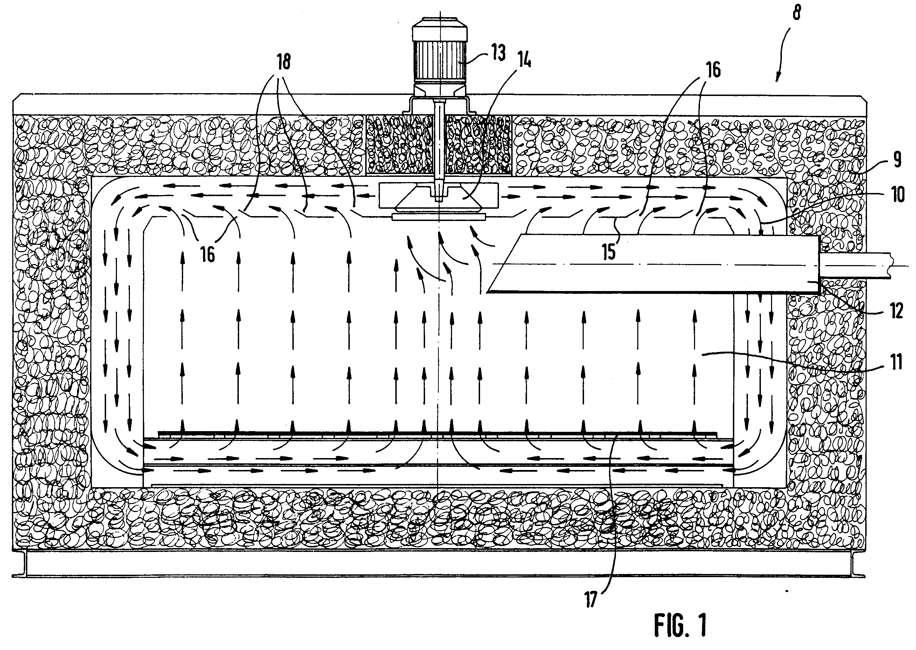

Gänzlich andere Verhältnisse herrschen aber bei der erfindungsgemäßen Kühlbahn 8. Auch diese weist eine Isolierung 9, einen Luftkanal 10 und einen Ofenraum 11 auf, wobei - gleichermaßen wie bei der vorbeschriebenen Kühlbahn - ein in den Ofenraum einragender Brenner 12 vorhanden ist. Im Luftkanal ist ebenfalls ein über einen Motor 13 antreibbarer Ventilator 14 vorgesehen. Im Unterschied zur Ausführungsform gemäß Fig. 2 weist hier die den Luftkanal 10 vom Ofenraum 11 trennende Wand 15 eine Vielzahl von über die gesamte Wandbreite angeordneter Öffnungen 16 auf, die, wie durch die Pfeile angedeutet, einen Luftdurchtritt vom Ofenraum 11 in den Luftkanal 10 ermöglichen. Dieser wird noch dadurch verstärkt, daß im Luftkanal vom Ventilator 14 Luft über die Öffnungen geblasen wird, und sich ein Druckprofil einstellt, welches eine Luftansaugung aus dem Ofenraum durch die Öffnungen ermöglicht. Auf diese Weise stellt sich, wie in Fig. 1 gezeigt, über den gesamten Ofenraum ein weitestgehend homogenes Strömungsprofil und damit ein gleichmäßiges Temperaturprofil ein. Bedingt durch den über die gesamte Ofenraumbreite herrschenden Luftzug tritt auch vermehrt Luft durch die vorteilhaft als engmaschiges Stahlgeflecht ausgebildete Förderbahn 17 über die gesamte Ofenraumbreite. Wie Fig. 1 ferner zeigt, sind an den Öffnungen schräg in den Luftkanal vorspringende Luftleitbleche 18 angeordnet, die die Vergleichmäßigung der Strömung noch weiter verbessern. Die Leitbleche 18 sind dabei so angeordnet, daß der durch die Öffnungen 16 tretenden Luft eine Bewegungskomponente in Richtung des Kanalzuges erteilt wird. Daneben können, in Fig. 1 nicht dargestellt, im Bereich unterhalb des Förderbandes Strömungseinrichtungen vorgesehen sein, die die über den Luftkanal 10 bodenseitig eingeblasene Luft definiert in Richtung des luftdurchlässigen Förderbandes 17 leiten, wobei auch diese Strömungseinrichtungen als Leitbleche oder dergleichen ausgebildet sein können.

## Patentansprüche

1. Kühlbahn zum Kühlen von in heißem Zustand bearbeiteten oder sich befindenden Gegenständen, insbesondere von Glasgegenständen, mit einem im Inneren der isolierten Kühlbahn vorgesehenen Ofenraum, dem mindestens ein Ventilator zum Umwälzen der Raumluft über einen außerhalb des Ofenraums verlaufenden Luftkanal zugeordnet ist, und mit wenigstens einer im Ofenraum umlaufenden, die Gegenstände tragenden Fördereinrichtung, dadurch gekennzeichnet, daß zumindest die benachbart zum Ventilator (14) verlaufende, den Luftkanal (10) vom Ofenraum (11) trennende Wand (15) zumindest im Bereich des Ventilators (14) mehrere einen Luftdurchtritt vom Ofenraum (11) zum Luftkanal (10) ermöglichende Öffnungen (16) aufweist.

2. Kühlbahn nach Anspruch 1, dadurch gekennzeichnet, daß die Öffnungen (16) im wesentlichen über die gesamte Breite der Wand (15) angeordnet sind.

3. Kühlbahn nach Anspruch 1 oder 2, dadurch gekennzeichnet, daß der Ventilator (14) im Bereich der Decke der Kühlbahn angeordnet ist.

4. Kühlbahn nach einem der vorangehenden Ansprüche, dadurch gekennzeichnet, daß zumindest einem Teil der Öffnungen (16) jeweils eine Luftleiteiteinrichtung zugeordnet ist.

5. Kühlbahn nach Anspruch 4, dadurch gekennzeichnet, daß die Luftleiteinrichtung als von der Wand (15) in den Luftkanal (10) vorspringendes Leitblech (18) ausgebildet ist.

6. Kühlbahn nach einem der vorangehenden Ansprüche, dadurch gekennzeichnet, daß im Ofenraum im Bereich unterhalb der Fördereinrichtung Strömungsführungseinrichtungen, insbesondere in Form von Leitblechen vorgesehen sind.

7. Kühlbahn nach einem der vorangehendne Ansprüche, gekennzeichnet durch wenigstens einen dem Ofenraum (11) zugeordneten Brenner (12).
